# EUROPEAN PATENT APPLICATION

(11) **EP 3 528 198 A1**
(43) Date of publication of application: **21.08.2019**
(21) Application number: 17847716.2
(22) Date of filing: 11.10.2017
(51) Int. Cl.: G06Q 50/06, E03B 1/00, G06Q 10/00

(54) **WATER PIPE UPDATE MANAGEMENT SYSTEM**

(30) Priority: 11.10.2016 JP 2016199884
(71) Applicant: Fuji Subsurface Information Ltd., Tokyo 108-0022 (JP)
(72) Inventor: TANAKA, Toshikazu, Tokyo 108-0022 (JP); HIRATA, Masahiro, Tokyo 108-0022 (JP)
(74) Representative: dompatent von Kreisler Selting Werner - Partnerschaft von Patent- und Rechtsanwälten mbB
(86) International application number: PCT/JP2017/036733
(87) International publication number: WO 2018/070396

(57) **Abstract**

It is an object of the present invention to provide a water pipe network renewal management system for individual water service providers to more flexibly develop a renewal plan for a water pipe.

Provided is a water pipe network renewal management system for supporting a renewal plan of a water pipe, including: a water pipe information registration means that registers water pipe information having pipe type information, laying place information, laying years information, and leakage information on a water pipe; an evaluation item registration means that updates an evaluation item for calculating a priority of renewing for a plurality of pieces of information included in the water pipe information; a calculation means that calculates evaluation information indicating the priority of each water pipe based on the water pipe information and the evaluation item; a list output means that outputs a list of the water pipe information with which the calculated evaluation information is associated.

## Description

### Technical Field

The present invention relates to a water pipe network renewal management system for supporting the formulation of a renewal plan for a water pipe.

### Background Art

Conventionally, a geographic information system (GIS) for adding various kinds of additional information to electronic map information to, for example, display, manage, and compute on a computer is used. Information displayed in the GIS is very diverse and is utilized in various fields such as simulation, real-time mapping, and construction of urban planning, using information regarding real estate, urban infrastructure (e.g., road, electricity, gas, water supply and sewer), artificial, disaster, and the like as necessary.

Meanwhile, in water supply management systems used by water service providers such as a waterworks bureau, attribute information such as a pipe type, a water supply port diameter, and a laying year concerning piping of water supply is recorded. It is necessary to renew the water pipes of a water distribution pipeline (trunk pipeline) of water supply due to aging, an increase in water users, and the like. In considering the timing to renew the water pipe network, a skilled water engineer makes consideration and decisions based on such attribute information.

Patent Literature 1 discloses a technique enabling a water service provider to easily judge the replacement timing of a water pipe by visualizing complaint data and leakage cause information from water users on a screen displaying the map information using color-coded display. According to the technique disclosed in Patent Literature 1, the water service provider can grasp a distribution situation such as which kind of complaints occur many times in which narrow area in a map screen only by glance at the map screen, thereby being able to grasp information necessary for management such as maintenance, mending, and replacement of water distribution pipeline and water supply equipment.

### Citation List

### Patent Literature

Patent Literature 1: Japanese Patent Application No. 2002-47696

### Summary of Invention

### Technical Problem

The technique disclosed in Patent Literature 1 enables the water service provider to display leakage locations and complaint data on a map to grasp and to formulate a renewal plan based on the displayed information. However, although it becomes possible to easily grasp a region where leakage occurred or a region where complaints appeared, it is still necessary to determine a specific target area to be renewed; for example, which specific water pipe should be preferentially renewed in such a region. In addition to the elements such as leakage and complaints, the renewal plan needs to be formulated under various constraint conditions, for example, preferentially replacing a water pipe in which a particular material is used, or preferentially replacing a pipe of critical importance. For this reason, analysis and judgment by a skilled expert remains as indispensable as ever to develop the renewal plan.

Furthermore, in practice, in addition to the above attributes of the water pipe, the fiscal situation of a municipality that manages the water pipes is imposed as a constraint condition for developing the renewal plan and thus the development of the renewal plan in line with the actual situation of each municipality cannot be supported only by analyzing with similar standards. Therefore, it is necessary to be able to flexibly determine the priority sequence for renewal work, such as the fiscal situation and a priority item of each municipality or the like.

The present invention has been made in view of the above circumstances and it is an object of the present invention to provide a water pipe network renewal management system for individual water service providers to more flexibly formulate a renewal plan for a water pipe.

### Solution to Problem

In order to solve the above problems, the present invention provides a water pipe network renewal management system for supporting a renewal plan of a water pipe, the water pipe network renewal management system including: a water pipe information registration means that registers water pipe information having pipe type information, laying place information, laying years information, and leakage information on a water pipe; an evaluation item registration means that updates an evaluation item for determining a priority of renewing for a plurality of pieces of information included in the water pipe information; a calculation means that calculates evaluation information for indicating the priority of renewing each water pipe based on the water pipe information and the evaluation item; a list output means that outputs a list of the water pipe information with which the calculated evaluation information is associated and displays the evaluation information relating to before and after a change of the evaluation item in a comparable manner; and a map display means that displays, on a map, a water pipe and a necessity of renewing the water pipe in a distinguishable manner using the laying place information and the evaluation information.

With such a configuration, it is possible to calculate the evaluation information on the water pipe from the water pipe information and the evaluation item and easily judge the priority of renewing the water pipe.

In a preferred mode of the present invention, the list output means displays evaluation information relating to before and after a change of the evaluation item in a comparable manner.

In a preferred mode of the present invention, the leakage information has cause information on leakage, the water pipe information registration means updates the water pipe information in response to information newly input because of replacement of the water pipe, the cause information according to the water pipe before the replacement is associated with the renewed water pipe information, and the evaluation information concerning the renewed water pipe is calculated using the cause information.

With such a configuration, it is possible to calculate the evaluation information using the cause information on leakage. Since the cause information on leakage sometimes occurs due to a place where the water pipe is laid, by associating a leakage cause that was included in the water pipe information before the replacement with the renewed water pipe information, it is possible to raise the priority of renewing the water pipe after the replacement or more accurately derive the evaluation information concerning a service life of the water pipe.

In a preferred mode of the present invention, the list output means displays a total amount of repair costs before the evaluation item is changed and a total amount of repair costs after the evaluation item is changed in a case where the evaluation item is updated by the evaluation item registration means. In a preferred mode of the present invention, the list output means outputs a list of the water pipe information based on a display condition that has been set and the evaluation information on each water pipe calculated by the calculation means. With such a configuration, it is possible to output a list, for example, only for a water pipe included in a certain area on the map or a water pipe to which predetermined evaluation information is given and to create a more detailed list for calculating the renewal plan for the water pipe.

In a preferred mode of the present invention, the list output means displays a necessity of renewing in a distinguishable manner based on the water pipe information and displays a change amount of the necessity in a case where the evaluation item is updated by the evaluation item registration means.

With such a configuration, it is possible to flexibly output information matching a constraint condition when a user creates the renewal plan while adjusting the evaluation item.

In a preferred mode of the present invention, the map display means displays a necessity of renewing the water pipe in a distinguishable manner based on a renewal sequence calculated as the evaluation information.

With such a configuration, it is possible to evaluate the water pipe using another piece of the water pipe information concerning the water pipe.

With such a configuration, it is possible to evaluate the water pipe using another piece of the water pipe information concerning the water pipe.

In a preferred mode of the present invention, the laying place information has position information on a place where the water pipe is installed and traffic amount information on a laying place.

With such a configuration, it is possible to evaluate the water pipe by adding a weight attributable to the laying place, thereby being able to raise the priority of renewing the water pipe or more accurately derive the evaluation information concerning a service life of the water pipe.

In a preferred mode of the present invention, the water pipe information has combination information derived based on one or more pieces of information included in the water pipe information, and the evaluation information is calculated using the combination information.

With such a configuration, it is possible to more precisely analyze the water pipe to evaluate.

In a preferred mode of the present invention, the combination information has cost information indicating a renewal cost of the water pipe, which is calculated based on another piece of the water pipe information, and the evaluation item registration means accepts registration of a combination information evaluation item for calculating the cost information.

The present invention provides a water pipe network renewal management server for supporting a renewal plan of a water pipe, the water pipe network renewal management server including: a water pipe information registration means that registers water pipe information having pipe type information, laying place information, laying years information, and leakage information on a water pipe; an evaluation item registration means that updates an evaluation item for determining a priority of renewing for a plurality of pieces of information included in the water pipe information; a calculation means that calculates evaluation information for indicating the priority of renewing each water pipe based on the water pipe information and the evaluation item; a list output means that outputs a list of the water pipe information with which the calculated evaluation information is associated and displays the evaluation information relating to before and after a change of the evaluation item in a comparable manner; and a map display means that displays, on a map, a water pipe and a necessity of renewing the water pipe in a distinguishable manner using the laying place information and the evaluation information.

The present invention provides a water pipe network renewal management program for supporting a renewal plan of a water pipe, the water pipe network renewal management program causing a computer to function as: a water pipe information registration means that registers water pipe information having pipe type information, laying place information, laying years information, and leakage information on a water pipe; an evaluation item registration means that updates an evaluation item for determining a priority of renewing for a plurality of pieces of information included in the water pipe information; a calculation means that calculates evaluation information for indicating the priority of renewing each water pipe based on the water pipe information and the evaluation item; a list output means that outputs a list of the water pipe information with which the calculated evaluation information is associated and displays the evaluation information relating to before and after a change of the evaluation item in a comparable manner; and a map display means that displays, on a map, a water pipe and a necessity of renewing the water pipe in a distinguishable manner using the laying place information and the evaluation information.

### Advantageous Effects of Invention

It is possible to provide a water pipe network renewal management system for individual water service providers to more flexibly formulate a renewal plan for a water pipe.

### Brief Description of Drawings

Fig. 1 is a schematic diagram of a water pipe network renewal management system according to an embodiment of the invention of the present application.
Fig. 2 is a hardware configuration diagram of a water pipe network renewal management server according to an embodiment of the invention of the present application.
Fig. 3 is a functional block diagram of a water pipe network renewal management server according to an embodiment of the invention of the present application.
Fig. 4 is a diagram illustrating an example of data stored in a storage unit according to an embodiment of the invention of the present application.
Fig. 5 is a diagram illustrating an evaluation example of a water pipe in a water pipe network renewal management system according to an embodiment of the invention of the present application.
Fig. 6 is screen display examples of a water pipe network renewal management system according to an embodiment of the invention of the present application.
Fig. 7 is a screen display example of a water pipe network renewal management system according to an embodiment of the invention of the present application.
Fig. 8 is a screen display example of a water pipe network renewal management system according to an embodiment of the invention of the present application.
Fig. 9 is a screen display example of a water pipe network renewal management system according to an embodiment of the invention of the present application.
Fig. 10 is a flowchart of a water pipe network renewal management system according to an embodiment of the invention of the present application.

### Description of Embodiments

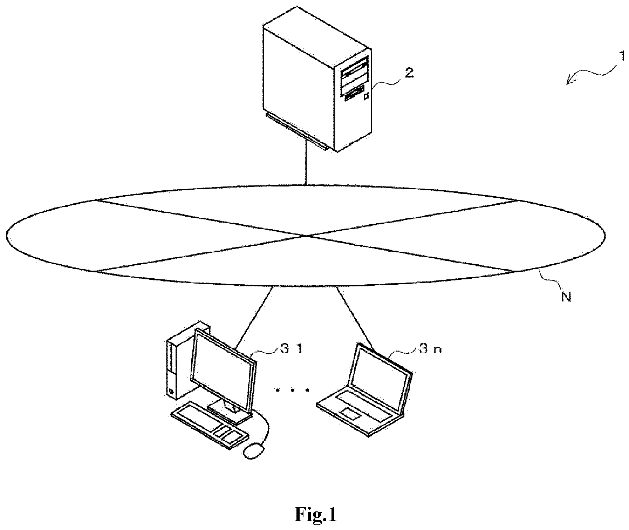

A water pipe network renewal management system according to an embodiment of the present invention will be described with reference to Figs. 1 to 10. Note that the embodiments indicated below are examples of the present invention and the present invention is not limited to the following embodiments. Various configurations also can be adopted.

In addition, a water pipe in the present embodiment represents a water conduit pipe that sends water drawn from a river, a well, or the like to a water purification plant, a water conveyance pipe that sends water from a water purification plant to a water distribution site or the like, a water distribution pipe (principal pipe) that supplies water to each household from a water distribution pond or the like, a water supply pipe that draws water from the water distribution pipe to each household, an agricultural water pipe which is a water conduit pipe, a water conveyance pipe, a water distribution pipe, and the like for agricultural water, a hot spring pipe that sends hot spring water to each household, and the like.

For example, in the present embodiment, the configuration, operation, and the like of the water pipe network renewal management system will be described, but similar methods, apparatuses, computer programs, recording media, and the like having a similar configuration can achieve similar action and effect. In addition, the program may be stored in a recording medium. The program can be installed in, for example, a computer using this recording medium. Here, the recording medium storing the program may be a non-transitory recording medium such as a compact disc read only memory (CD-ROM).

This water pipe network renewal management system is for a water service provider to manage piping, but may be configured to collectively manage faucet information and information on water users (user information and information concerning usage fees, and the like). In addition, the water pipe network renewal management system may be used as one function of a cross-sectional system used in each department of government agencies (e.g., management of residents and management of taxes).

Fig. 1 is a diagram illustrating an outline of the water pipe network renewal management system according to the embodiment of the present invention. The water pipe network renewal management system 1 is provided with a water pipe network renewal management server 2 and user terminals 3 (31 to 3n) used by users (water service providers), which are configured communicably via a network N.

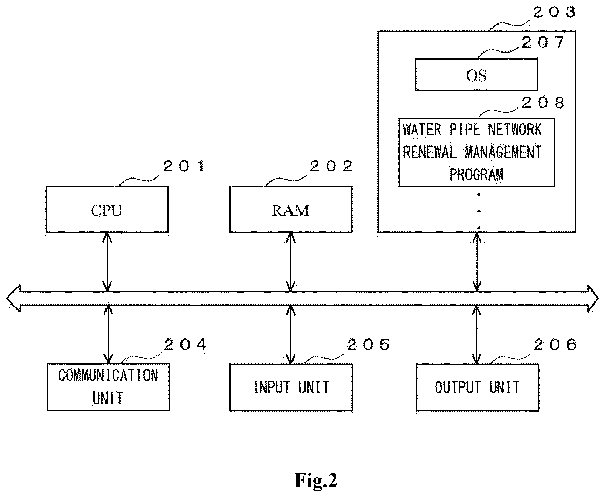

Fig. 2 is a diagram illustrating a hardware configuration of the water pipe network renewal management server 2 according to the embodiment. The water pipe network renewal management server 2 is provided with an arithmetic device (central processing unit (CPU) 201), a main storage device (random access memory (RAM) 202), an auxiliary storage device (recording unit 203) such as a hard disk drive (HDD), a solid state drive (SSD), and a flash memory, a communication unit 204 which is an interface for communicating with an external apparatus via the network, an input unit 205, and an output unit 206. In addition, an operating system 207, a water pipe network renewal management program 208 that exhibits its functions in cooperation with the operating system 207, and the like are recorded in the recording unit 203.

A general-purpose computer device provided with an arithmetic device such as a CPU, a main storage device such as a RAM, an auxiliary storage device such as an HDD, an SSD, and a flash memory, various input/output devices including a connection means to the network N, and the like can be used for the user terminal 3. The functions of the user terminal 3 are used by accessing the water pipe network renewal management system 1 via the network N and the user terminal 3 is used to, for example, register and change information concerning a water pipe.

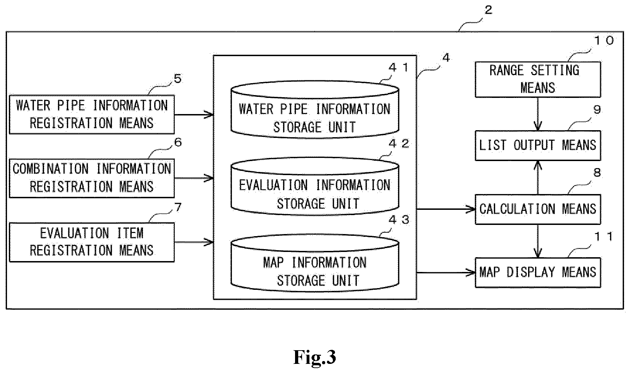

Fig. 3 is a functional block diagram of the water pipe network renewal management server 2 according to the embodiment of the present invention. The water pipe network renewal management server 2 is provided with a storage unit 4, a water pipe information registration means 5, a combination information registration means 6, an evaluation item registration means 7, a calculation means 8, a list output means 9, a range setting means 10, and a map display means 11.

The storage unit 4 is provided with a water pipe information storage unit 41, an evaluation information storage unit 42, and a map information storage unit 43.

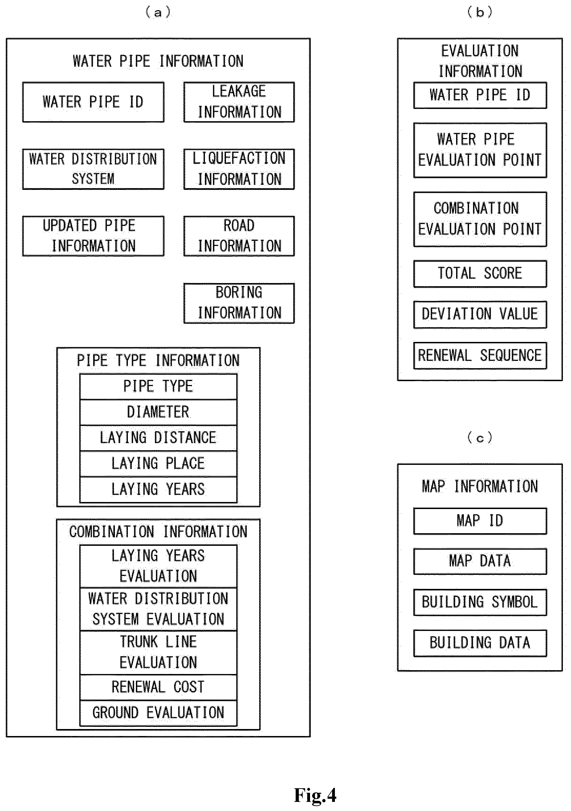

The water pipe information storage unit 41 stores information relevant to the water pipe. Fig. 4(a) is an example of water pipe information stored in the water pipe information storage unit 41. The water pipe information in the present embodiment has pipe information such as a water pipe ID, a water distribution system of the water pipe, a pipe type (pipe type information), a diameter, a laying distance, a laying place (laying place information), and laying years (laying years information) of the water pipe, renewed pipe information to be used after renewing, leakage information such as a leakage state, a leakage cause, and a leakage position, liquefaction information around a laying location of the water pipe, road information such as a traffic amount, a result of investigation by boring (boring information), and combination information.

The combination information is water pipe information calculated based on another piece of the water pipe information. Here, the another piece of the water pipe information may be information relating to the same water pipe or may be information relating to another water pipe (e.g., water pipe information on a water conveyance pipe and a water distribution pipe located upstream).

Specifically, examples thereof include laying years evaluation based on the importance, a pipe type, and laying years of the own pipe, water distribution system evaluation based on the importance of the water distribution system, the leakage information thereon, and the like, trunk line evaluation based on the importance of the trunk line, the leakage information thereon, and the like, a renewal cost calculated based on a pipe type, a diameter, and a laying distance of the own pipe, and a renewed pipe type, ground evaluation based on the liquefaction information, the road information, the boring information, and the like.

Fig. 4(b) is an example of evaluation information stored in the evaluation information storage unit 43. The evaluation information in the present embodiment has a water pipe ID, a water pipe evaluation item (water pipe evaluation point) for calculating a score of the water pipe from the water pipe information, a combination information evaluation item (combination evaluation point) for evaluating the combination information, a total score calculated based on the water pipe information, a deviation value, and a renewal sequence of a target to be evaluated.

Fig. 4(c) is an example of map information stored in the map information storage unit 44. The map information in the present embodiment has, for example, a map ID, map data, a building symbol displayed on the map data, and building data such as a building name and an address relating to a corresponding building. User information and faucet information on a water user residing in corresponding building data, or connected water pipe information, and the like (not illustrated) may be associated with the map information.

The water pipe information registration means 5 accepts the registration of the water pipe information to the water pipe information storage unit 41 and the update, change, deletion, and the like of information. The water pipe information is registered, for example, when a new water pipe is laid and is changed (updated) when an existing water pipe is renewed.

At the time of change (update), at least a part of the water pipe information before the update may be associated with the renewed water pipe information or passed thereto. For example, information concerning a leakage cause sometimes arises from a laying place of the water pipe. Accordingly, a configuration can be employed in which, when the priority of renewing the water pipe is calculated, a weight is added as leakage attributable to the laying place such that the priority of renewing is raised.

The combination information registration means 6 accepts the registration of the combination information evaluation item such as an evaluation item name of the combination information, an evaluation item table and an evaluation formula for deriving the combination information. For example, by registering a renewal cost per unit length of a water pipe whose pipe type is an iron pipe and diameter is 200 mm as the combination information evaluation item, the renewal cost (combination information) can be calculated based on the laying distance thereof.

The evaluation item registration means 7 accepts the registration and update of a water pipe information evaluation item such as an evaluation item table and an evaluation formula for calculating the evaluation information based on the water pipe information. The water pipe information evaluation item is for determining the priority of renewing the water pipe by deriving a score of each piece of information included in the water pipe information to evaluate each water pipe.

Based on the water pipe evaluation item registered by the evaluation item registration means 7 and the water pipe information registered by the water pipe information registration means 5 and the combination information registration means 6, the calculation means 8 calculates the evaluation information on each water pipe.

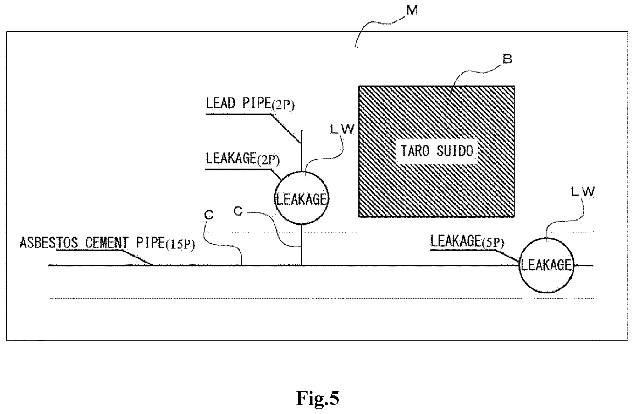

Fig. 5 is an image diagram when a water pipe is evaluated. A building symbol B and a water pipe symbol C are displayed on map information M. In addition, leakage LW is occurring in this water pipe. In this case, for example, two points are allocated because the pipe type is a lead pipe and 15 points are allocated because the pipe type is an asbestos cement pipe in accordance with the water pipe evaluation item and some points are additionally allocated to leakage locations based on the scale and importance of the leakage. The total of 24 points is stored to the evaluation information storage unit 42 as an evaluation score of this water pipe.

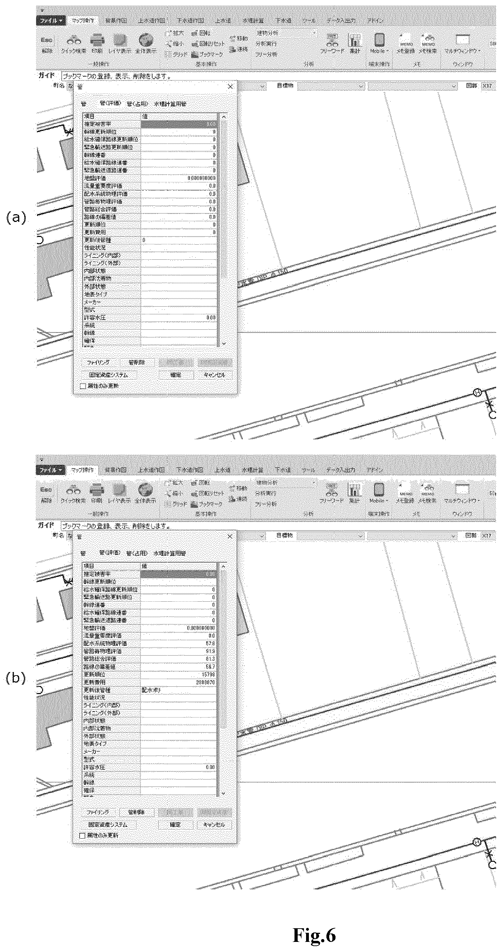

Fig. 6(a) illustrates the evaluation information before the calculation by the calculation means 8, whereas Fig. 6(b) illustrates the evaluation information calculated by the calculation means 8. In the case of the illustrated example, the combination information such as pipeline evaluation, water distribution system evaluation, and the renewal cost and the renewal sequence are displayed. It is not absolutely necessary for the calculation means 8 to use all water pipe information and combination information to calculate the evaluation information. Parts of the water pipe information other than the combination information and/or the combination information may be used for evaluating the water pipe from a viewpoint different from the renewal sequence.

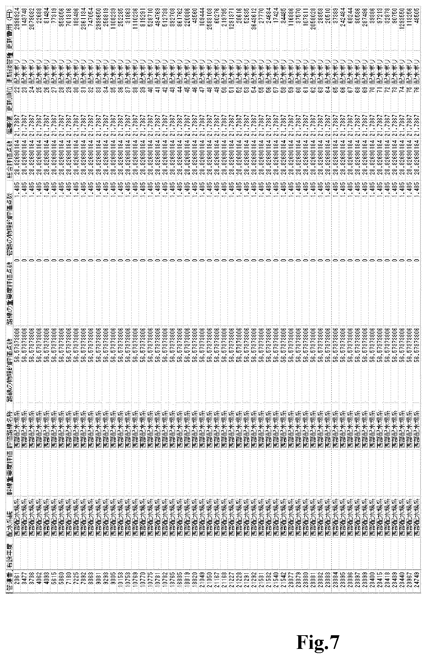

The list output means 9 creates and displays a list of the water pipe information based on the evaluation information calculated by the calculation means 8. Fig. 7 is a screen display example when a list is created and output by the list output means 9. For example, the list may be configured such that a total amount of renewal costs in a predetermined range or the like is collectively displayed.

In addition, the evaluation item registration means 7 can update the numerical value and the weight of the score of the evaluation item to output the updated evaluation information. For example, in the example in Fig. 5, two points are assigned to the lead pipe, but these points can be changed to one point such that the evaluation information is recalculated. Thus, for each user, it is possible to calculate a list of evaluation information more suitable for each user according to user's fiscal situation, budget, policy of the renewal plan, and the like.

Both of an item that can be edited and an item that cannot be edited may be designated for the evaluation items. In addition, the list output means 9 may display the evaluation information relating to before and after a change of the evaluation item in a comparable manner, for example, a total amount of repair costs before the evaluation item is changed and a total amount of repair costs after the evaluation item is changed, or the number of items of the water pipe information equal to or more than a threshold value before and after the change. Thus, it is possible to easily judge whether the list relating to after the change of the evaluation item is suitable for the user.

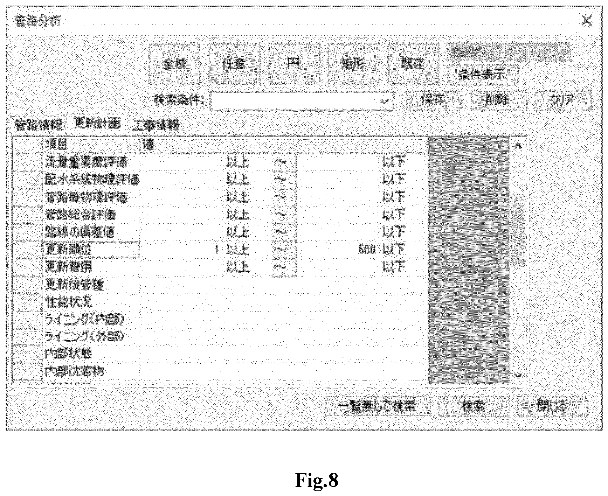

The range setting means 10 accepts a range setting of the water pipe displayed by the list output means 9 and the map display means 11. Fig. 8 is a screen display example when the range setting is input. The range setting is set using information from the water pipe information including the combination information and the evaluation information.

For example, based on the pipeline evaluation, the water distribution system evaluation, the renewal cost, the renewal sequence, and the like calculated using the calculation tool 8 in Fig. 6, the display contents displayed by the list output means 9 and the map display means 11 are configured such that the range settings thereof are enabled. In addition, a display range of each value can be displayed in a distinguishable manner based on this setting item and the value of each item. For example, the necessity of renewing the water pipe is displayed in a distinguishable manner based on the renewal sequence.

Furthermore, as another range setting method, the range is configured to be able to be created in such a manner that selection of a predetermined area on the map (in the illustrated example, "whole", "arbitrarily selected area", "circular area", "rectangular area", "existing area (e.g., municipality classification)") is accepted and the water pipes included in this area are specified as a population. In addition to or in place of the range setting using the water pipe information, the combination information, and the evaluation information, it is possible to select an area to set the range as described above.

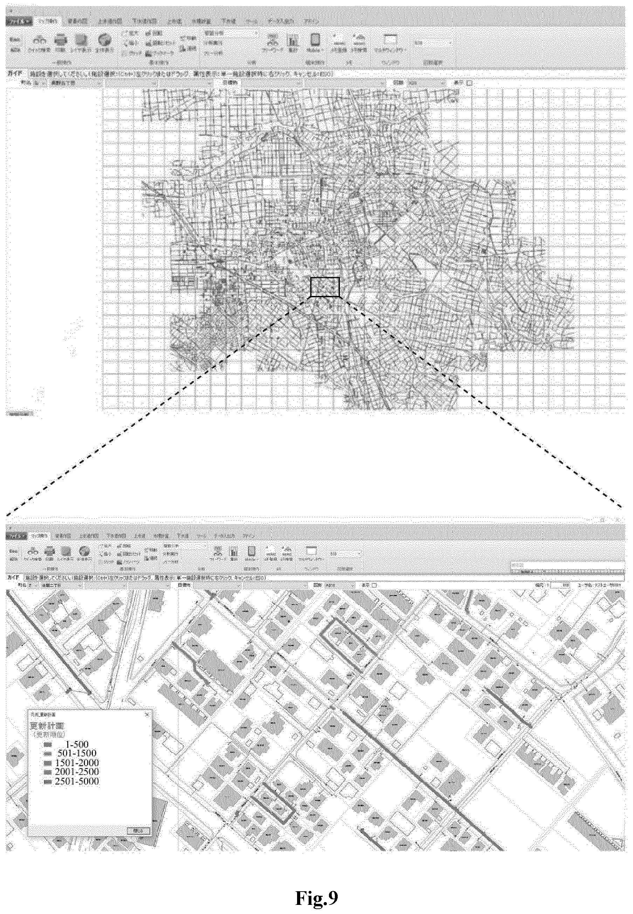

Fig. 9 illustrates a screen display example of the map information. The map display means 11 displays the water pipe information included in a list range designated by the range setting means 10 on the map based on the evaluation information.

Note that the map display means 11 may display the leakage information on the map based on the leakage position in the water pipe information via a leakage position symbol indicating the leakage position, a character, a sign, and the like. In addition, depending on the priority of renewing and a damage situation judged according to the leakage state, the cause of leakage, and the like, a visible change may be added to the water pipe information and the leakage information (e.g., the water pipe, the leakage position symbol, a character, and a sign) on the map. Here, the visible change refers to changing a display method such as change or addition of color, change or addition of hatching, and change or addition of line type and additionally displaying another object or the like. Thus, it is possible to more efficiently, for example, correct and edit the evaluation item using visualized information.

In Fig. 9, the map information displaying a wide area and the map information displayed in an enlarged scale are displayed. The water pipes are displayed on the map in a distinguishable manner according to the priority sequence of renewing. Color-coded display based on the renewal sequence is set in the range setting means 10 and the water pipe information up to 5000 items is displayed on the map from a highest renewal sequence item. The illustrated example indicates a color-coded display in which a water pipe having the renewal sequence ranging from 1 to 500 is colored red, a water pipe having the renewal sequence ranging from 501 to 1500 is colored yellow, a water pipe having the renewal sequence ranging from 1501 to 2000 is colored green, a water pipe having the renewal sequence ranging from 2001 to 2500 is colored light blue, and a water pipe having the renewal sequence ranging from 2501 to 5000 is colored dark blue.

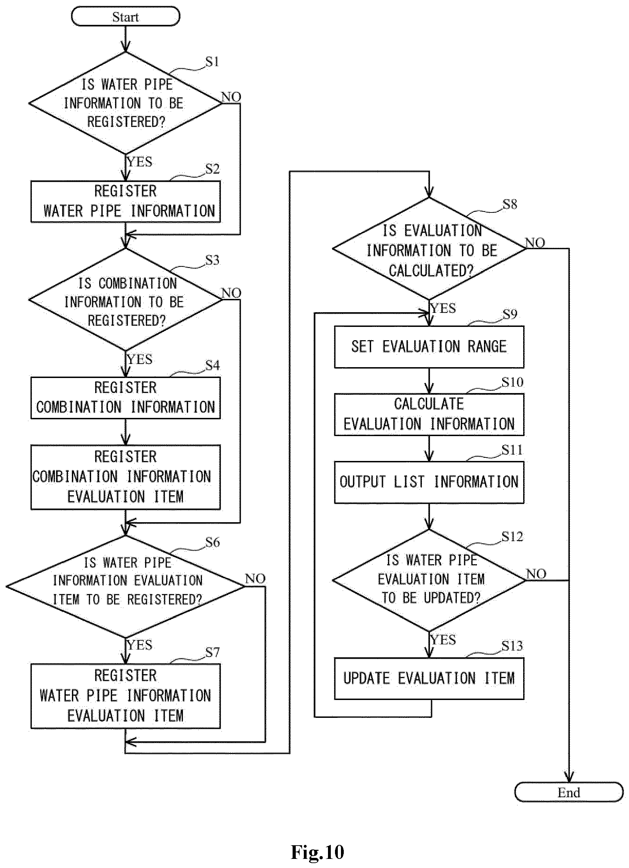

Next, processes performed when the water pipe network renewal management system according to the present embodiment is used will be described with reference to a flowchart in Fig. 10.

In step S1, when the water pipe information is, for example, registered or edited (YES in step S1), registration or the like of the water pipe information (step S2) is performed using the water pipe information registration means 5. In step S3, when the combination information is, for example, registered or edited (YES in step S3), registration or the like of the combination information (step S4) is performed using the combination information registration means 6. In addition, when the combination information is registered, the combination information evaluation item is registered (step S5) and definition on which water pipe information is used to calculate the combination information is made.

Next, in step S6, when the water pipe information evaluation item is, for example, registered or edited (YES in step S6), registration of the water pipe information evaluation item (step S7) is performed using the evaluation item registration means 7. In step S8, whether to calculate the evaluation information is selected. When the evaluation information is not to be calculated (NO in step S8), the process is terminated.

When the evaluation information is to be calculated (YES in step S8), an evaluation range is set using the range setting means 10 (step S9). Once the range setting is made, the evaluation information is calculated (step S10) and the list output means 9 outputs list information (step S11).

Next, whether to update (change) the water pipe evaluation item is determined (step S12). When update is not to be performed (NO in step S12), the process is terminated. When update is to be performed (YES in step S12), the evaluation item is updated using the evaluation item registration means 7 (step S13). Then, procedures in steps S9 to S11 are repeated to output the list information. This makes it possible to create a list more suitable for an individual user and utilize the list to develop the renewal plan.

### Reference Signs List

- 1: Water pipe network renewal management system
- 2: Water pipe network renewal management server
- 201: CPU
- 202: RAM
- 203: Recording unit
- 204: Communication unit
- 205: Input unit
- 206: Output unit
- 207: Operating system
- 208: Water pipe network renewal management program
- 3: User terminal
- 4: Storage unit
- 41: Water pipe information storage unit
- 42: Evaluation information storage unit
- 43: Map information storage unit
- 5: Water pipe information registration means
- 6: Combination information registration means
- 7: Evaluation item registration means
- 8: Calculation means
- 9: List output means
- 10: Range setting means
- 11: Map display means
- N: Network
- M: Map information
- B: Building symbol
- C: Water pipe symbol
- LW: Leakage

## Claims

1. A water pipe network renewal management system for supporting a renewal plan of a water pipe, the water pipe network renewal management system comprising:
a water pipe information registration means that registers water pipe information having pipe type information, laying place information, laying years information, and leakage information on a water pipe;
an evaluation item registration means that updates an evaluation item for determining a priority of renewing for a plurality of pieces of information included in the water pipe information;
a calculation means that calculates evaluation information for indicating the priority of renewing each water pipe based on the water pipe information and the evaluation item;
a list output means that outputs a list of the water pipe information with which the calculated evaluation information is associated and displays the evaluation information relating to before and after a change of the evaluation item in a comparable manner; and
a map display means that displays, on a map, a water pipe and a necessity of renewing the water pipe in a distinguishable manner using the laying place information and the evaluation information.

2. The water pipe network renewal management system according to claim 1, wherein
the list output means displays a total amount of repair costs before the evaluation item is changed and a total amount of repair costs after the evaluation item is changed in a case where the evaluation item is updated by the evaluation item registration means.

3. The water pipe network renewal management system according to claim 1 or 2, wherein
the list output means:
displays a necessity of renewing in a distinguishable manner based on the water pipe information; and
displays a change amount of the necessity in a case where the evaluation item is updated by the evaluation item registration means.

4. The water pipe network renewal management system according to any one of claims 1 to 3, wherein
the map display means displays a necessity of renewing the water pipe in a distinguishable manner based on a renewal sequence calculated as the evaluation information.

5. The water pipe network renewal management system according to any one of claims 1 to 4, wherein
the laying place information has position information on a place where the water pipe is installed and traffic amount information on a laying place.

6. The water pipe network renewal management system according to any one of claims 1 to 5, wherein
the water pipe information has combination information derived based on one or more pieces of information included in the water pipe information, and
the evaluation information is calculated using the combination information.

7. The water pipe network renewal management system according to claim 6, wherein
the combination information has cost information indicating a renewal cost of the water pipe, which is calculated based on another piece of the water pipe information, and
the evaluation item registration means accepts registration of a combination information evaluation item for calculating the cost information.

8. A water pipe network renewal management server for supporting a renewal plan of a water pipe, the water pipe network renewal management server comprising:
a water pipe information registration means that registers water pipe information having pipe type information, laying place information, laying years information, and leakage information on a water pipe;
an evaluation item registration means that updates an evaluation item for determining a priority of renewing for a plurality of pieces of information included in the water pipe information;
a calculation means that calculates evaluation information for indicating the priority of renewing each water pipe based on the water pipe information and the evaluation item;
a list output means that outputs a list of the water pipe information with which the calculated evaluation information is associated and displays the evaluation information relating to before and after a change of the evaluation item in a comparable manner; and
a map display means that displays, on a map, a water pipe and a necessity of renewing the water pipe in a distinguishable manner using the laying place information and the evaluation information.

9. A water pipe network renewal management program for supporting a renewal plan of a water pipe, the water pipe network renewal management program causing a computer to function as:
a water pipe information registration means that registers water pipe information having pipe type information, laying place information, laying years information, and leakage information on a water pipe;
an evaluation item registration means that updates an evaluation item for determining a priority of renewing for a plurality of pieces of information included in the water pipe information;
a calculation means that calculates evaluation information for indicating the priority of renewing each water pipe based on the water pipe information and the evaluation item;
a list output means that outputs a list of the water pipe information with which the calculated evaluation information is associated and displays the evaluation information relating to before and after a change of the evaluation item in a comparable manner; and
a map display means that displays, on a map, a water pipe and a necessity of renewing the water pipe in a distinguishable manner using the laying place information and the evaluation information.
